# EUROPÄISCHE PATENTSCHRIFT

(11) **EP 1 469 054 B1**
(45) Veröffentlichungstag und Bekanntmachung des Hinweises auf die Patenterteilung: **13.08.2008**
(21) Anmeldenummer: 04006467.7
(22) Anmeldetag: 18.03.2004
(51) Int. Cl.: C09J 7/02

(54) **Selbstklebende Schutzfolie zum Temporären Schutz von Fahrzeuglacken**
Self-adhesive foil for temporarily protecting vehicle paints
Film de protection autocollant pour la protection temporaire des peintures de véhicule

(30) Priorität: 17.04.2003 DE 10318151
(43) Veröffentlichungstag der Anmeldung: 20.10.2004
(73) Patentinhaber: tesa AG, 20253 Hamburg (DE)
(72) Erfinder: Lühmann, Bernd, Dr., 22844 Norderstedt (DE); Portmann, Michael, 20359 Hamburg (DE); Klemp, Jobst-Waldemar, 22896 Schenenfeld (DE); Böhm, Nicolai, Dr., 20257 Hamburg (DE)
(74) Vertreter: Stubbe, Andreas

(56) Entgegenhaltungen:
- EP-A- 0 707 053
- EP-A- 0 763 584
- DE-A- 2 327 007
- PATENT ABSTRACTS OF JAPAN Bd. 1995, Nr. 08, 29. September 1995 (1995-09-29) & JP 7 117195 A (MITSUBISHI CHEM MKV CO), 9. Mai 1995 (1995-05-09)

## Beschreibung

Die Erfindung betrifft eine selbstklebende Folie zum temporären Schutz von frischen Lackoberflächen von Fahrzeugen wie Automobilen und frisch lackierten Fahrzeugteilen gegen Verschmutzungen und Beschädigungen während der Montage, des Transports und der Lagerung sowie ihre Verwendung an Fahrzeugen, im speziellen an Automobilen.

Seit vielen Jahren ist es üblich, den Lack von Neufahrzeugen auf dem Transport vom Hersteller bis zum Endkunden vor schädlichen Umwelteinflüssen wie Steinschlag, Flugrost oder Vogelkot zu schützen. Besondere Verbreitung haben dabei temporäre selbstklebende Schutzfolien gefunden, da sie kostengünstig aufzubringen sind und eine befriedigende Schutzwirkung haben. Hauben, die das gesamte Fahrzeug umschließen und zum Teil aufschrumpfbar sind, haben wegen einer Reihe von Nachteilen noch keine große Akzeptanz im Markt gefunden. Ein besonderer Vorteil der Schutzfolien liegt darin, dass sie nach Wunsch schon direkt nach dem Lackieren noch vor der Montage aufgebracht werden können und somit zusätzlich einen Montageschutz bieten.

Eine wesentliche Anforderung an eine temporäre Oberflächenschutzfolie ist ihre Witterungs- und Lichtbeständigkeit über einen Zeitraum von mehreren Monaten. So muss eine solche Folie auch nach einem halben Jahr Verweildauer in extremen klimatischen Gegebenheiten wie beispielsweise dem Klima in Florida ohne Versprödung oder Masserückstände wegen lichtbedingter Zersetzung entfernbar sein. Ebenfalls muss sichergestellt sein, dass die Klebmasse bei erhöhten Oberflächentemperaturen des Fahrzeuges, wie sie in südlichen Gefilden oder bei direkter Sonneneinstrahlung auftreten können, beim Abziehen weder kohäsiv oder adhäsiv zur Trägerfolie versagt und/oder beim Abziehen Masserückstände hinterlässt.
Zudem wird von den Anwendern eine ausgewogene Klebcharakteristik erwartet, das heißt, die Folie soll zwar eine gute Anfangsklebkraft aufweisen, aber nach Gebrauch nicht zu schwer entfernbar sein, also nicht zu stark aufziehen.
Über allem steht die Forderung nach Lackverträglichkeit, was bedeutet, dass die Lackoberfläche nach Entfernen der Schutzfolie keinerlei Beeinträchtigungen in Form von irreversiblen Deformationen aufweisen soll. Deformationen sind Abdrücke im Lack, die sich als Konturen von Folienkante, eingeklebten Luftblasen und Falten oder als Oberflächenstrukturveränderung unter der gesamten beklebten Fläche zeigen.
Diese Forderung ist besonders anspruchsvoll, wenn die Karosserie kurze Zeit, mitunter nur 30 Minuten, nach dem Einbrennen des Lackes noch vor der Montage des Fahrzeuges beklebt wird.

Bisher verfügbare reversibel klebende Oberflächenschutzfolien weisen erhebliche Mängel in Bezug auf eines oder mehrere der oben genannten Merkmale auf.

Gemäß dem Stand der Technik werden zum temporären Oberflächenschutz in der Regel als Folienmaterialien Polyolefine oder Mischungen aus solchen, die üblicherweise mit Lichtschutzmitteln und Titandioxid abgemischt sind, verwendet.

Auf dem Markt finden sich zur Zeit im wesentlichen drei Klebmassesysteme, die auf Polyacrylsäurestern, Polyethylenvinylacetat, Polyisobutylen beruhen.

Ersteres System ist zwar bekanntermaßen gut lichtbeständig und kann in seinen Klebeigenschaften bei geeigneter Auswahl der Comonomere auch relativ ausgewogen bezüglich Anfangs- und Endhaftung sein, aber die Lackverträglichkeit ist ungenügend. Insbesondere in der Fläche zeigen sich irreversible Oberflächenveränderungen auf den meisten Fahrzeuglacken.

Eine Lackschutzfolie auf Basis Polyethylenvinylacetat (EVA) ist in DE 195 32 220 A1 beschrieben. Dieses System erreicht bereits nach kurzer Zeit gute Verklebungswerte und gewährleistet eine große Verklebungssicherheit gegen unerwünschtes selbsttätiges Ablösen während des Transportes. Als nachteilig wird vom Anwender mitunter das starke Aufziehen empfunden, das mit einer ausgeklügelten Mischung verschiedener Copolymere des EVA wie in DE 100 50 499 A1 beschrieben gemildert werden kann.
Die Lackverträglichkeit ist auch bei dieser Massebasis nicht immer optimal. Bei EVA beobachtet man besonders in Falten und Blasen starke irreversible Deformationen auf zahlreichen Serienlacken.
Vermutlich ist die hohe Polarität beider genannter Systeme für die starken Wechselwirkungen mit den ebenfalls polaren Lacken verantwortlich.

Das bekannteste Beispiel für eine unpolare Klebmassebasis ist Naturkautschuk. Mit Weichmachern, Klebharzen und Füllstoffen geeignet rezeptierte Massen zeigen tatsächlich eine hervorragende Lackverträglichkeit, aber - wenig überraschend - wegen der zahlreichen Doppelbindungen in der Polymerhauptkette keine ausreichende Lichtstabilität, so dass die Folie bereits nach kurzer Gebrauchsdauer nur mit schmierigen oder im weiteren Verlauf gar lackartig verhärteten Klebmasserückständen entfernt werden kann.
Spezialklebebänder für den Design-Painting Bereich zur Zweifarblackierung greifen zumeist auf Naturkautschuk-basierte Klebebänder zurück. Dabei werden solche Bänder zum Teil auf ganz frische Lackflächen geklebt und nach dem zweiten Farbauftrag bis zu einer Stunde auf 150 °C zum Einbrennen des Lackes erhitzt. Die erste Lackschicht weist danach keine sichtbaren Veränderungen in Form von Abdrücken auf.

Ein Vertreter für einen unpolaren Synthesekautschuk ist Polyisobutylen. Eine Schutzfolie mit diesem Klebmassesystem wird zum Beispiel in EP 0 519 278 A1 beschrieben und zeichnet sich gegenüber Naturkautschuk aufgrund der fehlenden Doppelbindungen durch deutlich bessere Witterungsbeständigkeit aus. Die Lackverträglichkeit ist häufig zufriedenstellend, aber auf zahlreichen Lacken weniger gut als die von Naturkautschukmassen.

In dem Abstract der JP 07 117 195 A ist eine Klebemasse für eine Oberflächenschutzfolie beschrieben, die aus einer Mischung aus einem Butylkautschuk und flüssigem Polyisobutylen besteht.
Es werden keine Elastomere mit dem Butylkautschuk vermengt, sondern flüssige Polyisobutylene.

Die EP 0 707 053 A offenbart eine Schutzfolie mit einer Klebmasse aus gesättigtem oder gering ungesättigtem Kautschuk, beispielsweise Butyl, und einem hochpolaren Additiv. Der Isoprengehalt soll unter 5 Molprozent, bevorzugt unter 3 Molprozent betragen.
Nicht beschrieben wird eine Abmischung des Butylkautschuks mit Elastomeren.

Aufgabe der vorliegenden Erfindung ist es, eine selbstklebende Schutzfolie zur Verfügung zu stellen, die die Nachteile des Standes der Technik nicht oder zumindest nicht in dem Umfang aufweist. Insbesondere soll das Problem der unbefriedigenden Lackverträglichkeit der aus dem Stand der Technik bekannten witterungsbeständigen Klebmassen gelöst werden, ohne dabei auf Naturkautschuk zurückzugreifen, weil dieser nicht witterungsbeständig ist.

Gelöst wird diese Aufgabe durch eine selbstklebende Schutzfolie, wie sie im Hauptanspruch niedergelegt ist. Gegenstand der Unteransprüche sind dabei vorteilhafte Weiterbildungen der selbstklebenden Schutzfolie sowie besondere Anwendungsmöglichkeiten.

Demgemäss betrifft die Erfindung eine selbstklebende Schutzfolie zum temporären Schutz von frischen Lackoberflächen von Fahrzeugen wie Automobilen und frisch lackierten Fahrzeugteilen mit einem Träger aus einer thermoplastischen Folie, vorzugsweise aus Polyolefinen, die mit einer Selbstklebemasse aus Butylkautschuk beschichtet ist, wobei der Isoprenanteil im Butylkautschuk bis zu 1,8 Molprozent beträgt.
Eine dermaßen erfindungsgemäße Folie weist eine bessere Lackverträglichkeit als solche mit Polyisobutylenklebmassen auf und ist dabei ausreichend lichtbeständig.

Die Klebmasse besteht aus Butylkautschuk, wobei der Isoprengehalt im Butylkautschuk bis zu 1,8 Molprozent, bevorzugt bis zu 1,2 Molprozent beträgt. Sie wird in Flächengewichten zwischen 3 und 35 g/m², bevorzugt zwischen 8 und 20 g/m² aufgetragen. Die Auftragung kann aus Lösung, zum Beispiel Hexan oder Benzin, erfolgen, aber auch aus der Schmelze entweder durch Coextrusion zusammen mit der Trägerfolie oder durch Kalandrieren.

Die Selbstklebeschicht ist mit Elastomeren abgemischt, wobei die Elastomere im Bereich bis zu 20 Gewichtsanteilen bezogen auf 100 Gewichtsanteile Butylkautschuk eingesetzt werden und die Elastomere gewählt werden aus der Gruppe Polyisobutylene, Polyolefincopolymere, Polybutene, hydrierte Blockcopolymere aus Styrol und Dienen oder Acrylatcopolymere.

Butylkautschuke sind Copolymere aus Isobuten und Isopren, die durch kationische Polymerisation in Lösung hergestellt werden. Der Isoprenanteil variiert typischerweise zwischen 0,5 und 5 Molprozent. Das Isopren wird normalerweise in 1,4-Addition eingebaut, so dass dieses Copolymer im Gegensatz zum Polyisobutylenhomopolymer Doppelbindungen in der Hauptkette aufweist. Es stellt also ein Bindeglied zwischen einem reinen Poly-cis-Isopren respektive Naturkautschuk und einem Polyisobutylenhomopolymer dar. Darin darf der Grund für die beobachtete bessere Lackverträglichkeit von Butylkautschuk verglichen mit Polyisobutylen vermutet werden.

Auch folgende Spezialtypen entsprechen dem erfindungsgemäßen Gedanken: eine weitere Gruppe von Butylkautschuken ist die der *starbranched* Typen, bei denen eine intensivere Verzweigung durch Comonomere wie Divinylbenzol erreicht wird. Neuerdings sind auch Butylkautschuke mit seitenständigen Doppelbindungen bekannt (1,2-beziehungsweise 3,4-Addition des Isoprens).

Hersteller solcher Produkte sind insbesondere die Firmen Bayer (Bayer Butyl) und Exxon (Exxon Butyl).

Überraschend und selbst für den Fachmann unerwartet zeigt eine Schutzfolie mit der erfindungsgemäßen Selbstklebemasse eine ausreichende Witterungsstabilität. Zwar steigt die Lackverträglichkeit mit steigendem Isoprenanteil weiter an, oberhalb von 1,8 Molprozent jedoch beginnt die Witterungsstabilität merklich abzunehmen, so dass die Folie nicht mehr in jedem Fall anwendungstypische Bedingungen, in der Regel mindestens 6 Monate Floridaklima, übersteht. Die Selbstklebemasse beginnt dann, sich allmählich zu zersetzen, was sich durch mehr oder weniger ausgeprägte Klebmasserückstände, besonders bei erhöhten Temperaturen und langsamen Demaskiergeschwindigkeiten zeigt.

Die erfindungsgemäße Selbstklebemasse bietet gegenüber solchen aus Polyisobutylen, die die lackverträglichste Type unter den in Markt vertretenen Systemen ist, einen weiteren Vorteil. Während Polyisobutylene streng linear aufgebaut sind, weisen die Butylkautschuke etwa an jeder zehnten Isopreneinheit eine Verzweigung auf (siehe White et al. "Macromolecules", 28 (1995) 3290 bis 3300).
Um eine ausreichende Kohäsion für eine Klebmasseanwendung insbesondere bei erhöhten Temperaturen zu erzielen, ist die Molmasse vorteilhafterweise mindestens eines Teils der eingesetzten Polyisobutylene relativ groß sein, in der Regel mindestens 200.000 g/mol (Zahlenmittel Mₙ).

Dagegen bewirkt die verzweigte Struktur der Butylkautschuke bei gleicher Molmasse eine größere Kohäsion und eine geringere Lösungsviskosität im gleichen Lösungsmittel, was eine wirtschaftlichere und umweltfreundlichere Verarbeitung ermöglicht: Mit höherem Feststoffgehalt der Masse kann die beschichtete Bahn schneller durch den Trocknungskanal gefahren werden, um das Lösungsmittel zu verdunsten, und gleichzeitig setzt man weniger Lösungsmittel frei, welches aufwändig aus der Abluft entzogen werden muss.
Auch für den lösemittelfreien Prozess zeigen sich Vorteile für Butylkautschuk. Für die Beschichtung von Polyisobutylen ausreichender Kohäsion aus der Schmelze in Form einer Coextrusion simultan mit der Trägerfolie gestaltet es sich als nahezu unmöglich, die deutlich größere Schmelzeviskosität des Polyisobutylens verglichen mit der der Folie so zu beherrschen, dass eine homogene Folie mit einem gleichmäßigen Dickenprofil über die gesamte Bahnbreite erzielt wird. Dieses gelingt bei Butylkautschukmassen mit anwendungsgerechter Kohäsion aufgrund der geringeren Schmelzeviskosität deutlich einfacher.

Zwar sind die Butylkautschuke, ähnlich wie Polyisobutylene mittleren Molekulargewichts, inhärent klebrig. Zur Optimierung der Eigenschaften, insbesondere des Klebeverhaltens, kann die Klebmasse der erfindungsgemäßen Schutzfolie dennoch vorteilhaft mit einem oder mehreren Additiven abgemischt werden. Solche Additive können Klebrigmacher (Haftklebeeigenschaften optimierende Klebharze), Weichmacher, anorganische oder organische Füllstoffe, Pigmente, Lichtschutzmittel u. a. in Form von UV-absorbierenden sterisch gehinderten Aminen (HALS), Alterungsschutzmittel in Form von zum Beispiel Lactonen oder primären und sekundären Antioxidantien sein. Optional können der Selbstklebemasse Vernetzungsmittel und Vernetzungspromotoren zugesetzt werden. Eine ausführliche Auswahl von Vernetzungsmittel und Vernetzungspromotoren sind in Ullmann's Encyclopedia of Industrial Chemistry (6. Auflage, 2003), Kapitel "Rubber, 4. Chemicals and additives" und Manual for Rubber Industry", Bayer AG (1995) beschrieben.

Elastomere zur Modifizierung der Selbstklebemasse sind Polyisobutylene, Polyolefincopolymere wie EPM oder EPDM, Polybutene, hydrierte Blockcopolymere aus Styrol und Dienen oder Acrylatcopolymere. Diese Elastomere werden im Bereich bis zu 20 Gewichtsanteile, vorzugsweise unter 10 Gewichtsarlteilen bezogen auf 100 Gewichtsanteile Butylkautschuk eingesetzt.

Geeignete Klebrigmacher sind beispielsweise synthetische Kohlenwasserstoffharze (zum Beispiel aus C5- oder C9-Monomeren), Naturharze, Polyterpenharze auf Basis von α-, β-Pinen oder δ-Limonen, Kolophonium und Kolophoniumderivate sowie weitere, wie sie aufgeführt sind in Ullmann's Encyclopedia of Industrial Chemistry (6. Auflage, 2003), Kapitel "Resins-Synthetic" und Resins-Natural". Vorrangig werden alterungsstabilere, hydrierte oder teilhydrierte Harze verwendet. In der Klebmasse der erfindungsgemäßen Schutzfolie werden bevorzugt 0 bis 50 Gewichtsteile, insbesondere 0 bis 20 Gewichtsteile eines Klebrigmachers bezogen auf 100 Gewichtsteile Basispolymer verwendet.

Geeignete Weichmacher für die Selbstklebemasse sind beispielsweise aliphatische, cycloaliphatische und aromatische Mineralöle, Di- oder Poly-Ester der Phthalsäure, Trimellitsäure oder Adipinsäure, flüssige Kautschuke (zum Beispiel Nitril- oder Polyisoprenkautschuke), flüssige Polymerisate (aus Isobuten oder Ethylen/Propylen), Acrylsäureester, Polyvinylether, Flüssig- und Weichharze auf Basis der Rohstoffe von Klebharzen, Wollwachs und andere Wachse oder flüssige Silikone. Besonders geeignet sind alterungsstabile Weichmacher ohne olefinische Doppelbindung. Bevorzugt werden 0 bis 40 Gewichtsteile, insbesondere 0 bis 10 Gewichtsteile eines Weichmachers bezogen auf 100 Gewichtsteile Basispolymer verwendet.

Als Trägermaterialien für die erfindungsgemäße Schutzfolie dienen thermoplastische Folien, bevorzugt Polyolefinfolien. Diese können zum Beispiel aus Polyethylen, Polypropylen sowie deren Mischungen oder Copolymeren (zum Beispiel Random-Copolymer oder Polypropylenblockcopolymer) bestehen.
Zur Einstellung besonderer mechanischer Eigenschaften wie Zähigkeit, Flexibilität, Glanz, Haftung zum Kleber, Extrusionsverhalten oder Oberflächenstruktur können die Folien auch unterschiedliche Mengen von weiteren Polyolefincopolymeren wie Copolymeren aus Ethylen und α-Olefinen wie 1-Buten, 1-Hexen, 1-Octen (je nach Anteil und Herstellungsverfahren LLDPE, VLDPE oder ULDPE oder Metallocen-PE genannt), aber auch Ethylen-Styrol-Copolymere, Ethylen mit polaren Comonomeren wie Acrylsäure und Copolymere des Propylens mit α-Olefinen, etwa Ethylen, 1-Buten, 1-Hexen, 1-Octen enthalten.

Für die Trägerfolien sind Dicken von 20 bis 80 µm (gegebenenfalls einschließlich der Haftvermittlerschicht) geeignet. Die Weichheit der Trägerfolie spielt bei der Verformbarkeit während der Applikation der Schutzfolie eine Rolle, die Kraft bei 10 % Dehnung sollte 25 N/15 mm, vorzugsweise 16 N/15 mm, sowohl in Längs- wie auch in Querrichtung nicht überschreiten. Wegen der Beständigkeit gegen Schrumpf in der Wärme und guter Verformbarkeit sind Copolymere des Propylens besonders geeignet. Geeignete Folien sind in DE 199 23 780 A1 und DE 196 35 704 A1 beschrieben.

Um der Trägerfolie die geforderte Witterungsstabilität zu geben, ist der Zusatz von Lichtschutzmitteln zu bevorzugen. Ihre Funktion besteht vorrangig in der Vermeidung der Versprödung der Trägerfolie.

Derartige Lichtschutzmittel sind bei Gaechter und Müller, Taschenbuch der Kunststoff-Additive, München 1979, bei Kirk-Othmer (3.) 23, 615 bis 627, bei Encycl. Polym. Sci. Technol. 14, 125 bis 148 und bei Ullmann's Encyclopedia of Industrial Chemistry (6. Auflage, 2003), Kapitel "Antioxidants" beschrieben. Insbesondere HALS-Lichtschutzmittel sind für die erfindungsgemäße Schutzfolie geeignet.
Die Menge des Lichtschutzmittels sollte mindestens 0,15 Gew.-%, vorzugsweise mindestens 0,30 Gew.-% bezogen auf die Trägerfolie betragen.

Eine zusätzliche Verbesserung der Lichtstabilität der Trägerfolie ist auch durch Zusatz von Titandioxid möglich. Vorteilhaft bezüglich der mechanischen Eigenschaften und der Homogenität des Weißgrades sind 5 bis 15 Gew.-% Titandioxidzusatz.

Vorzugsweise liegt die UV-Durchlässigkeit der Schutzfolie im Bereich von 290 bis 360 nm durch das Zusammenwirken von Lichtschutzmitteln und Pigmenten unter ca. 1 %, vorzugsweise unter ca. 0,1 %.
Aus optischen Gründen kann die Folie auch farbig pigmentiert sein.

Derartige Folien können auf Kalandern, Blasanlagen oder vorzugsweise Cast-Anlagen (*T-die technology*) gefertigt werden, wobei die Folie nicht durch Recken (Verstrecken) mit Reckwalzen oder Reckrahmen mono- oder biaxial verstreckt wird. Beim Blasen einer solchen Folie ist die Orientierung über Abzugsgeschwindigkeit, Aufblasverhältnis und Temperaturprofil so gering wie möglich zu halten.
Aus Gründen der besseren Verarbeitbarkeit, besonders beim Blasfolienverfahren, kann der Zusatz von Antiblockmitteln, zum Beispiel Kreide oder Talkum, vorteilhaft sein.

Die Folie selbst kann aus mehreren einzelnen Schichten bestehen.

Zur Verbesserung der Haftung zwischen Folie und Selbstklebemasse ist die Verwendung einer Haftvermittlerschicht vorteilhaft, aber nicht zwingend erforderlich. Die Trägerfolie besteht in einem solchen Fall mindestens aus einer Basisschicht und einer Haftvermittlerschicht. Letztere besteht vorzugsweise aus einem Polyolefin geringerer Dichte, einem Blend aus mehreren Polyolefinen und/oder Komponenten der Basisschicht und/oder Komponenten der Klebmasse. Durch die Verwendung einer Haftvermittlerschicht kann sichergestellt werden, dass auch bei erhöhten Objekttemperaturen, wie sie unter Sonneneinstrahlung oft erreicht wird, ein rückstandsfreies Entfernen der Schutzfolie von der zu schützenden Oberfläche möglich ist.
Alternativ leistet zur Verbesserung der Haftung zwischen Folie und Kleber auch eine physikalische Vorbehandlung der Folie wie Coronaentladung oder Flammvorbehandlung gute Dienste.

Zur Verbesserung der Abrollkraft von Rollenware ist die Verwendung einer Trennschicht bei der erfindungsgemäßen Schutzfolie notwendig. Diese Trennschicht kann als Lackierung auf der Rückseite der Folie ausgeführt sein. Vorzugsweise werden dabei Silicone oder Polyvinylcarbamate, insbesondere Polyvinylstearylcarbamat (PVSC), mit einem Auftrag von 0,01 bis 0,5 g/m² verwendet.
Bei coextrudierten Folien kann die trennmittelhaltige Folienschicht auf der Basisschicht platziert sein.

Eine derartig ausgeführte erfindungsgemäße Schutzfolie lässt sich einfach auf die Lackflächen von frischlackierten Karosserien oder fabrikneuen Fahrzeugen respektive deren Anbauteilen aufbringen, auch wenn die zu beklebenden Flächen gewölbt sind. Die Schutzfolie vereinigt die angestrebten Eigenschaften von guter Initialhaftung, sicherer Haftung während des Transportes und müheloser Entfernbarkeit, da das Aufziehverhalten auch langfristig oder bei Wärmeeinfluss gering ist. Auch feuchte (Regen, Nebel, Tau) und kalte Witterungsbedingungen übersteht die Folie ohne unerwünschte, selbsttätige Ablösungserscheinungen.

Besonders hervorzuheben ist die hervorragende Lackverträglichkeit, welche die der marktüblichen und der aus dem Stand der Technik bekannten Produkte übersteigt. Dies gilt auch für sehr frische Lacke, die erst 30 Minuten vor der Beklebung den Trockenofen verlassen haben. Trotz der im Butylkautschuk eingebauten Doppelbindungen erweist sich die Witterungsbeständigkeit überraschenderweise über einen Zeitraum von einem halben Jahr unter Floridaklima als gegeben. Die Folie lässt sich auch nach einer solchen Beanspruchung ohne versprödungsbedingtes Reißen ohne Klebmasserückstände entfernen, auch wenn die Demaskierung unter erhöhten Temperaturen, etwa in sommerlicher Mittagssonne, oder bei sehr langsamen Abziehgeschwindigkeiten erfolgt. Unter der Folie sind an Falten, an den Folienrändern oder an eingeklebten Luftblasen geringere Lackdeformationen sichtbar als bei marktüblichen Produkten mit Polyacrylat-, EVA- oder PIB Klebmassen. In der Fläche sind überhaupt keine optischen Beeinträchtigungen sichtbar.

Die erfindungsgemäße Schutzfolie ist daher hervorragend geeignet, ihren Zweck zu erfüllen, frisch lackierte Automobile oder Automobilteile während der Montage oder dem Transport vom Herstellwerk zum Händler vor Beschädigung durch mechanische und chemische Einflüsse zu schützen.

Im folgenden soll die Erfindung anhand von Beispielen erläutert werden, ohne diese damit allerdings einschränken zu wollen.

### Beispiele

Alle Beispielschutzfolien wurden durch Beschichtung der Klebmassen aus Lösung auf einer 50 µm dicken Polyolefincastfolie, bestehend aus 60 Gew.-Teilen PP-Homopolymer, 30 Gew.-Teilen LLDPE, 10 Gew.-Teilen Titandioxid und 0,3 Gew.-Teilen eines HALS-Stabilisators (Tinuvin 770, Ciba), hergestellt. Die Folienrezeptur stellte sicher, dass die Ergebnisse nicht durch vorzeitige Versprödung der Folie verfälscht wurden.
Alle Muster wurden so beschichtet, dass nach fünf Minuten Trocknen bei 100 °C ein Klebmasseflächengewicht von 15 g/m² ± 2 g/m² resultierte.
Die Rezeptierung der unterschiedlichen Selbstklebemassen ist in Tabelle 1 dargestellt

Die Beispiele 1 bis 3 sind gestrichen worden.

**Tabelle 1: Übersicht über die bei den Beispielen und Gegenbeispielen verwendeten Selbstklebemassen**

| | **Beispiele** | | | | | | **Gegenbeispiele** | | | | | |
|---|---|---|---|---|---|---|---|---|---|---|---|---|
| **Rohstoffe** | | | | **4** | **5** | **6** | **7** | **8** | **9** | **10** | **11** | **12** |
| **Butyl 100** Butylkautschuk von Bayer, Isoprengehalt 0,9 Mol-% | | | | 90 | 85 | 80 | | | | | | |
| **Butyl 065** Butylkautschuk von Exxon Isoprengehalt 0,9 Mol-% | | | | | | | | | | | | |
| **Butyl 265** Butylkautschuk von Exxon, Isoprengehalt 1,5 Mol% | | | | | | | | | | | | |
| **Butyl 365** Butylkautschuk von Exxon, Isoprengehalt 2,4 Mol-% | | | | | | | 100 | | | | | |
| **Hyvis 200** Polybuten von BP Chemical | | | | 10 | | | | | | | | |
| **Oppanol B 50** PIB von BASF, Mₙ = 120.000 g/mol | | | | | | | | | | | 100 | 85 |
| **Oppanol B 150** PIB von BASF, Mₙ = 425.000 g/mol | | | | | 15 | 10 | | | | | | 15 |
| **Levapren 500** EVA von Bayer mit 50 Gewichtsprozent Vinylacetatanteil | | | | | | | | | | 100 | | |
| **Regalite R 101** Kohlenwasserstoffharz von Hercules | | | | | | 10 | | | | | | |
| **Klebmasse auf Basis Naturkautschuk** ^{a} | | | | | | | | 100 | | | | |
| **Klebmasse auf Basis Polyacrylat** ^{b} | | | | | | | | | 100 | | | |
| **Lösungsmittel Benzin 60/95** | | | | x | x | x | x | x | | | x | x |
| **Lösungsmittel Toluol** | | | | | | | | | | x | | |
| **Lösungsmittel Benzin 60/93 : Aceton (80:20)** | | | | | | | | | x | | | |

| | | | | | | | | | | | | |
|---|---|---|---|---|---|---|---|---|---|---|---|---|
| ^{a}60 % Naturkautschuk, 10 % Kreide, 15 % Terpenphenolharz, 10 % Poly-β-Pinenharz, 5 % Mineralöl (jeweils Gewichtsprozent) ^{b}Copolymer aus 50 % 2-Ethylhexylacrylat, 49 % Butylacrylat, 1 % Acrylsäure (jeweils Gewichtsprozent) | | | | | | | | | | | | |

### Prüfkriterien

Als entscheidende Prüfkriterien für die Eignung einer Schutzfolie für frische Automobillacke wurden folgende als wesentlich angesehen und herangezogen:
- UV-Beständigkeit
- Lackverträglichkeit
- Kraftaufwand zum Demaskieren der Folie nach Gebrauch

Die Reihenfolge der Kriterien spiegelt auch ihre anwendungstechnische Bedeutung (abnehmend mit steigender Nummer) wider, die auch in der Höhe der für die Testergebnisse zu vergebenden Punktzahlen abgebildet ist.

### Durchführung der Tests

### UV-Beständigkeit

Die UV-Beständigkeit wurde gemäß EN ISO 4892-2 über 600 h geprüft. Als Prüfhaftgrund dienten Musterbleche, die mit einem wasserbasierten Basislack (Farbe dunkelblau) und einem 2K-PU-Klarlack (BASF) gemäß Herstellerangaben lackiert wurden. 30 Minuten nach der Ofentrocknung wurden darauf Muster von 2 cm Breite und 15 cm Länge verklebt, wobei gewollt einige Falten eingeklebt wurden. Die Bewitterung erfolgte in einem Bewitterungsgerät der Firma Atlas (Xenotest Beta). Nach vollendeter Exposition wurden die Streifen in Winkeln von 90° und 180° zügig abgezogen und die auf dem dunklen Lack gut detektierbaren, durch UV-Einfluss hervorgerufenen Klebmassespuren visuell nach folgendem Schema beurteilt:
0 = keine Masserückstände sichtbar
3 = minimale Masserückstände sichtbar
5 = leichte Masserückstände sichtbar
7 = deutliche bis vollflächige Masserückstände sichtbar

### Lackverträglichkeit

Für die visuelle Beurteilung auf Lackdeformationen wurden die Bleche aus dem UV-Beständigkeitstest herangezogen. Nach erfolgter Beurteilung auf durch UV-Einfluss hervorgerufene Klebmassespuren wurden die Lackbleche mit Benzin 60/95 von eventuell verbliebenen Massespuren gereinigt. Als Kriterium für die Lackverträglichkeit diente das Ausmaß der Lackdeformationen entlang der Kante der Teststreifen, in Falten und unter der ehemals beklebten Fläche.
Das anwendungstechnische Gesamturteil wurde nach folgendem Bewertungsschema zusammengefasst:
0 = keine Deformationen erkennbar
1 = minimale Deformationen erkennbar
3 = leichte Deformationen erkennbar
5 = deutliche Deformationen erkennbar

### Kraftaufwand zum Demaskieren der Folie nach Gebrauch

Dieses Kriterium wurde vom Prüfer subjektiv beim Abziehen der Teststreifen nach 600 h Verweildauer im Xenotestgerät ermittelt.
Es wurde wie folgt beurteilt:
0 = ausgewogener Kraftaufwand
1 = Kraftaufwand etwas zu gering (-) oder zu groß (+)
3 = Kraftaufwand deutlich zu gering (-) oder zu groß (+)

### Ergebnisse

Die Testergebnisse sind in nachfolgender Tabelle 2 zusammengefasst.

Eine geringe Punktzahl bedeutet ein gutes, eine höhere ein schlechteres anwendungstechnisches Gesamturteil.

**Tabelle 2: Zusammenstellung der Prüfergebnisse der Beispielmuster**

| | **Beispiele** | | | | | | **Gegenbeispiele** | | | | | |
|---|---|---|---|---|---|---|---|---|---|---|---|---|
| **Prüfkriterium** | | | | **4** | **5** | **6** | **7** | **8** | **9** | **10** | **11** | **12** |
| UV-Beständigkeit | | | | 0 | 0 | 0 | 3 | 7 | 0 | 0 | 0 | 0 |
| Lackverträglichkeit | | | | 1 | 1 | 1 | 1 | 0 | 5 | 5 | 3 | 3 |
| Kraftaufwand zum Demaskieren | | | | 1 (+) | 0 | 1 (+) | 0 | 1 (+) | 3 (+) | 3(+) | 3 (-) | 3 (-) |
| **Gesamtpunktzahl** | | | | **2** | **1** | **2** | **4** | **8** | **8** | **8** | **6** | **6** |

Die Ergebnisse zeigen, dass Schutzfolien mit Klebmassen basierend auf Butylkautschuk die beste Eignung in Bezug auf UV-Beständigkeit, Lackverträglichkeit und Demaskierverhalten zeigen. Zwar zeigt die Naturkautschukmasse die beste Lackverträglichkeit, hinterlässt aber nach der UV-Bewitterung vollflächige Klebmasserückstände. Die Muster mit Butylmassen zeigen nur minimale Lackdeformationen und sind sogar lackverträglicher als die PIB basierten Klebmassen. Bei der UV Stabilität dagegen fallen die beiden Massetypen gleich aus, mit Ausnahme der Exxon Butyl Type 365, die nach den 600 h Xenotest erste Kohäsionsschwächen zeigt.
Das Demaskierverhalten ist bei den erfindungsgemäßen Massen überwiegend ausgewogen, wohingegen die marktüblichen Klebmassesysteme EVA und Polyacrylat stark aufziehen und außerdem starke Deformationen des Lackes verursachen. PIB tendiert zu zu leichter Ablösbarkeit, was in der Praxis zu selbsttätigen Ablösungen führen könnte.

Schutzfolien für Automobillacke mit Klebmassen basierend auf Butylkautschuk mit einem Isoprengehalt von bis zu 1,8 Molprozent sind demzufolge hervorragend geeignet, die an sie gestellten Anforderungen, insbesondere UV-Beständigkeit, Lackverträglichkeit und ausgewogenes Demaskierverhalten besser zu erfüllen als Schutzfolien, die dem bekannten Stand der Technik entsprechen.

## Patentansprüche

1. Selbstklebende Schutzfolie zum temporären Schutz von frischen Lackoberflächen von Fahrzeugen wie Automobilen und frisch lackierten Fahrzeugteilen mit einem Träger aus einer thermoplastischen Folie, vorzugsweise aus Polyolefinen, und einer Selbstklebeschicht aus Butylkautschuk, wobei
der Isoprengehalt im Butylkautschuk bis zu 1,8 Molprozent, bevorzugt bis zu 1,2 Molprozent beträgt und
die Selbstklebeschicht mit Elastomeren abgemischt ist, wobei die Elastomere im Bereich bis zu 20 Gewichtsanteilen bezogen auf 100 Gewichtsanteilen Butylkautschuk eingesetzt werden und die Elastomere gewählt werden aus der Gruppe Polyisobutylene, Polyolefincopolymere, Polybutene, hydrierte Blockcopolymere aus Styrol und Dienen oder Acrylatcopolymere.

2. Selbstklebende Schutzfolie nach Anspruch 1, **dadurch gekennzeichnet, dass**
der Butylkautschuk ein *starbranched*-Typ ist und/oder seitenständige Doppelbindungen enthält.

3. Selbstklebende Schutzfolie nach Anspruch 1 oder 2, **dadurch gekennzeichnet, dass** die Selbstklebeschicht mit einem oder mehreren Additiven abgemischt ist wie Klebrigmachern, Weichmachern, anorganischen oder organischen Füllstoffen, Pigmenten, Lichtschutzmitteln, Alterungsschutzmitteln, Vernetzungsrtitteln und/oder Vernetzungspromotoren.

4. Selbstklebende Schutzfolie nach zumindest einem der Ansprüche 1 bis 3, **dadurch gekennzeichnet, dass**
die Elastomere unter 10 Gewichtsanteilen bezogen auf 100 Gewichtsanteile Butylkautschuk eingesetzt werden.

5. Selbstklebende Schutzfolie nach mindestens einem der vorhergehenden Ansprüche, **dadurch gekennzeichnet, dass**
das Auftragsgewicht der Selbstklebeschicht auf der Trägerfolie zwischen 3 und 35 g/m², bevorzugt zwischen 8 und 20 g/m² beträgt.

6. Selbstklebende Schutzfolie nach mindestens einem der vorhergehenden Ansprüche, **dadurch gekennzeichnet, dass**
die Trägerfolie aus Polyolefinen besteht wie Polyethylen, Polypropylen sowie deren Mischungen oder Copolymeren.

7. Selbstklebende Schutzfolie nach mindestens einem der vorhergehenden Ansprüche, **dadurch gekennzeichnet, dass**
der Trägerfolie weitere Polyolefincopolymere zugesetzt sind wie Copolymere aus Ethylen und α-Olefinen, Ethylen-Styrol-Copolymere, Ethylen mit polaren Comonomeren und Copolymere des Propylens mit α-Olefinen.

8. Selbstklebende Schutzfolie nach mindestens einem der vorhergehenden Ansprüche, **dadurch gekennzeichnet, dass**
die Dicke der Trägerschicht zwischen 20 und 80 µm beträgt, gegebenenfalls einschließlich einer Haftvermittlerschicht, die zwischen der Trägerschicht und der Kleberschicht angeordnet ist.

9. Selbstklebende Schutzfolie nach mindestens einem der vorhergehenden Ansprüche, **dadurch gekennzeichnet, dass**
die Trägerschicht mindestens ein Lichtschutzmittel in einer Menge von mindestens 0,15 Gew.-% und/oder Titandioxid, vorzugsweise in einer Menge von 5 bis 15 Gew.-%, enthält.

10. Selbstklebende Schutzfolie nach mindestens einem der vorhergehenden Ansprüche, **dadurch gekennzeichnet, dass** die UV-Durchlässigkeit der Schutzfolie im Wellenlängenbereich von 290 bis 360 nm unter 1 % liegt.

11. Verwendung einer Schutzfolie nach zumindest einem der vorhergehenden Ansprüche auf frisch lackierten Oberflächen von Automobilen oder Automobilteilen als Montage- oder Transportschutz.

12. Verwendung einer Schutzfolie nach zumindest einem der vorhergehenden Ansprüche zum Schutz von empfindlichen Lack-, Metall-, Kunststoff- oder Glasoberflächen.

## Claims

1. Self-adhesive protective sheet for the temporary protection of fresh paint surfaces of vehicles such as cars and freshly painted vehicle parts, having a backing comprising a thermoplastic film, preferably of polyolefins, and a self-adhesive layer of butyl rubber, the isoprene content of the butyl rubber being up to 1.8 mole per cent, preferably up to 1.2 mole per cent and the self-adhesive layer being blended with elastomers, the elastomers being used preferably in the range from 0 to 20 parts by weight per 100 parts by weight of butyl rubber and the elastomers being selected from groups of polyisobutylenes, polyolefin copolymers, polybutenes, hydrogenated block copolymers of styrene and dienes or acrylate copolymers.

2. Self-adhesive protective sheet according to Claim 1, **characterized in that** the butyl rubber is a *starbranched* type and/or contains pendant double bonds.

3. Self-adhesive protective sheet according to Claim 1 or 2, **characterized in that** the self-adhesive layer is blended with one or more additives such as tackifiers, plasticizers, organic or inorganic fillers, pigments, light stabilizers, ageing inhibitors, crosslinking agents and/or crosslinking promoters.

4. Self-adhesive protective sheet according to at least one of Claims 1 to 3, **characterized in that** the elastomers are used at below 10 parts by weight per 100 parts by weight of butyl rubber.

5. Self-adhesive protective sheet according to at least one of the preceding claims, **characterized in that** the coatweight of the self-adhesive layer on the backing film is between 3 and 35 g/m², preferably between 8 and 20 g/m².

6. Self-adhesive protective sheet according to at least one of the preceding claims, **characterized in that** the backing film is composed of polyolefins, such as polyethylene, polypropylene and also mixtures or copolymers thereof.

7. Self-adhesive protective sheet according to at least one of the preceding claims, **characterized in that** further polyolefin copolymers are added to the backing film, such as copolymers of ethylene and α-olefins, ethylene-styrene copolymers, ethylene with polar comonomers and copolymers of propylene with α-olefins.

8. Self-adhesive protective sheet according to at least one of the preceding claims, **characterized in that** the thickness of the backing layer is between 20 and 80 µm, including where appropriate an adhesion promoter layer located between the backing layer and the adhesive layer.

9. Self-adhesive protective sheet according to at least one of the preceding claims, **characterized in that** the backing layer comprises at least one light stabilizer in an amount of at least 0.15% by weight and/or titanium dioxide, preferably in an amount of from 5 to 15% by weight.

10. Self-adhesive protective sheet according to at least one of the preceding claims, **characterized in that** the UV transmittance of the protective sheet in the wavelength region from 290 to 360 nm is below 1%.

11. Use of a protective sheet according to at least one of the preceding claims, on freshly painted surfaces of cars or car parts as assembly protection or transit protection.

12. Use of a protective sheet according to at least one of the preceding claims for protecting sensitive paint, metal, plastic or glass surfaces.

## Revendications

1. Feuille de protection autoadhésive en vue de la protection temporaire de surfaces peintes fraîches de véhicules automobiles et de pièces de véhicules fraîchement peintes à l'aide d'un support fait d'une feuille thermoplastique, de préférence, en polyoléfines, et d'une couche autoadhésive en caoutchouc butyle, la teneur en isoprène dans le caoutchouc butyle allant jusqu'à 1,8 pour cent en moles, de préférence, jusqu'à 1,2 pour cent en moles et la couche autoadhésive étant mélangée à des élastomères, les élastomères étant utilisés dans la plage allant jusqu'à 20 parts en poids, par rapport à 100 parts en poids de caoutchouc butyle et les élastomères étant sélectionnés parmi le groupe des polyisobutylènes, des copolymères de polyoléfines, des polybutènes, des copolymères séquencés hydrogénés en styrène et en diènes ou des copolymères d'acrylates.

2. Feuille de protection autoadhésive selon la revendication 1, **caractérisée en ce que** le caoutchouc butyle est du type ramifié en étoile *(starbranched)* et/ou contient des liaisons doubles latérales.

3. Feuille de protection autoadhésive selon la revendication 1 ou 2, **caractérisée en ce que** la couche autoadhésive est mélangée à un ou plusieurs additifs comme des agents de pégosité, des plastifiants, des charges inorganiques ou organiques, des pigments, des agents de protection contre la lumière, des agents de protection contre le vieillissement, des agents de réticulation et/ou des agents promoteurs de la réticulation.

4. Feuille de protection autoadhésive selon au moins l'une quelconque des revendications 1 à 3, **caractérisée en ce que** les élastomères sont utilisés à raison de moins de 10 parts en poids, par rapport à 100 parts en poids de caoutchouc butyle.

5. Feuille de protection autoadhésive selon au moins l'une quelconque des revendications précédentes, **caractérisée en ce que** le grammage de la couche autoadhésive sur la feuille de support est compris entre 3 et 35 g/m², de préférence entre 8 et 20 g/m².

6. Feuille de protection autoadhésive selon au moins l'une quelconque des revendications précédentes, **caractérisée en ce que** la feuille de support en polyoléfines se compose de polyéthylène, de polypropylène ainsi que de leurs mélanges ou de leurs copolymères.

7. Feuille de protection autoadhésive selon au moins l'une quelconque des revendications précédentes, **caractérisée en ce que** l'on ajoute à la feuille de support des copolymères de polyoléfines supplémentaires, tels que des copolymères de l'éthylène et d'α-oléfines, des copolymères éthylène-styrène, de l'éthylène avec des comonomères polaires et des copolymères du propylène avec des α-oléfines.

8. Feuille de protection autoadhésive selon au moins l'une quelconque des revendications précédentes, **caractérisée en ce que** l'épaisseur de la couche de support est comprise entre 20 et 80 µm, le cas échéant, y compris une couche de promoteur d'adhésion, qui est disposée entre la couche de support et la couche adhésive.

9. Feuille de protection autoadhésive selon au moins l'une quelconque des revendications précédentes, **caractérisée en ce que** la couche de support contient au moins un agent de protection contre la lumière en une quantité d'au moins 0,15 % en poids et/ou de dioxyde de titane, de préférence dans une quantité de 5 à 15 % en poids.

10. Feuille de protection autoadhésive selon au moins l'une quelconque des revendications précédentes, **caractérisée en ce que** la perméabilité aux rayons UV de la feuille de protection se situe à moins de 1 % dans la plage de longueurs d'onde de 290 à 360 nm.

11. Utilisation d'une feuille de protection selon au moins l'une quelconque des revendications précédentes, sur des surfaces fraîchement peintes d'automobiles ou de pièces d'automobiles en tant que protection de montage ou de transport.

12. Utilisation d'une feuille de protection selon au moins l'une quelconque des revendications précédentes, en vue de la protection de surfaces délicates peintes, de métaux, de matières synthétiques ou de verre.
